Europäisches Patentamt

European Patent Office

Office européen des brevets

(11) Veröffentlichungsnummer: **0 418 547 A2**

(12) **EUROPÄISCHE PATENTANMELDUNG**

(21) Anmeldenummer: 90115484.9

(22) Anmeldetag: 13.08.90

(51) Int. Cl.5: **B23K 11/08**

(30) Priorität: 20.09.89 CH 3413/89

(43) Veröffentlichungstag der Anmeldung:
27.03.91 Patentblatt 91/13

(84) Benannte Vertragsstaaten:
CH DE ES FR GB GR IT LI NL SE

(71) Anmelder: ELPATRONIC AG
Baarerstrasse 117
CH-6300 Zug(CH)

(72) Erfinder: Stieger, Othmar
Schuermattstrasse 18
CH-8963 Kindhausen(CH)

(74) Vertreter: Hotz, Klaus, Dipl.-El.-Ing. / ETH
c/o SOUDRONIC AG Industriestrasse 35
Postfach 11
CH-8962 Bergdietikon(CH)

(54) **Widerstandsnahtschweissmaschine.**

(57) Beschrieben ist eine kompakte Widerstandsnahtschweißmaschine, bei der die obere Elektrodenrolle
(14) statt an einem Pendelrollenkopf an einem
schwenkbar gelagerten Ausleger (12) vorgesehen ist.
Die unter der oberen Elektrodenrolle (14) angeordnete untere Elektrodenrolle (16) ist wie üblich an einem
starren Unterarm (8) vorgesehen. Die Schwenklagerung (10) des Auslegers (12) besteht auf der dem
Unterarm (8) benachbarten Seite aus einem Paket
Kupferfolien (102) und auf der von dem Unterarm (8)
abgewandten Seite aus einem Stahlband (101). Das
Stahlband (101) und die Kupferfolien (102) sind jeweils einerseits am Maschinengestell (4) und andererseits am gegenüberliegenden Ende des Auslegers (12) eingespannt. Der Ausleger (12) ist daher
nach einem ParallelogrammlenkerPrinzip schwenkbar gelagert, wobei die Schwenklagerung (10)
gleichzeitig zur Schweißstromübertragung zur oberen Elektrodenrolle (14) dient. Die Schwenklagerung
(10) gestattet der oberen Elektrodenrolle (14) lediglich eine vertikale Auf-und Abbewegung. Der beschriebene Aufbau ermöglicht, einen aufwendigen
Pendelrollenkopf zu vermeiden und die Widerstandsnahtschweißmaschine kompakter zu bauen, ohne
daß die gute Führung der oberen Elektrodenrolle
(14) vertikal und in Schweißrichtung verloren geht.

**Fig. 3**

# WIDERSTANDSNAHTSCHWEISSMASCHINE

Die Erfindung betrifft eine Widerstandsnaht-schweißmaschine, insbesondere zum Längsnaht-schweißen von Dosenrümpfen, mit zwei übereinander angeordneten Elektrodenrollen, mit einem schwenkbar gelagerten Ausleger, der die obere Elektrodenrolle trägt und vertikal und in Schweißrichtung führt, mit einem Unterarm, der die untere Elektrodenrolle trägt, und mit flexiblen Strombändern in der Stromzuführung zu der oberen Elektrodenrolle.

Bei einer bekannten Widerstandsnahtschweißmaschine dieser Art (DE-PS 37 10 875) ist der schwenkbar gelagerte Ausleger, der die obere Elektrodenrolle trägt und führt, als ein Dreieckslenker aus einem Bügel und einem Pendelarm aufgebaut, die jeweils an einem Ende am Maschinengestell schwenkbar gelagert und am anderen Ende nahe der oberen Elektrodenrolle aneinander angelenkt sind. Der Pendelarm hat an dem anderen Ende einen Tragflansch für die obere Elektrodenrolle und ist an dem einen Ende in einem Pendelrollenkopf mittels Wälzlagern drehbar gelagert. An diesem Ende des Pendelarms ist auch ein Zahnkranz befestigt, über den eine Kette den Pendelarm und damit die obere Elektrodenrolle in Drehung versetzen kann. Der Pendelrollenkopf ist nach dem Prinzip einer austarierten Waage aufgebaut, so daß seine Pendellagerung das gesamte Gewicht trägt und die obere Elektrodenrolle praktisch gewichtsfrei auf der unteren Elektrodenrolle ruht. Zum Einstellen einer bestimmten Andrückkraft drückt eine Feder von oben her auf die Achse der oberen Elektrodenrolle. Die vom Schweißtransformator zur oberen Elektrodenrolle führende Leitung umfaßt eine Stromschiene und den Pendelrollenkopf, welche durch flexible Strombänder elektrisch leitend miteinander verbunden sind. Zwischen dem Pendelrollenkopf und dem Pendelarm ist eine mit Flüs-sigmetall gefüllte Ringkammer zur Stromübertra-gung angeordnet. Die Strombänder bestehen aus gewebter Litze, das heißt aus lappigem Material, das allseits flexibel ist, da die Strombänder die freie Beweglichkeit des Pendelrollenkopfes gegenüber der Stromschiene möglichst wenig behindern sollen.

Die Ausbildung des Auslegers mit dem Pendelrollenkopf, wie sie bei dieser bekannten Widerstandsnahtschweißmaschine vorgesehen ist, ist zwar kompliziert und aufwendig, bei Hochleistungsmaschinen garantiert sie aber eine gute Schweißqualität, insbesondere eine gleichmäßig gute Schweißqualität auf der gesamten Länge der Längsnähte von Dosenrümpfen. Bei einfacheren Widerstandsnahtschweißmaschinen, die mit geringeren Schweißgeschwindigkeiten als solche Hochleistungsmaschinen arbeiten, wäre es unter Kostengesichtspunkten vorteilhaft, wenn eine einfachere Lagerung der oberen Elektrodenrolle vorgesehen werden könnte, ohne daß dadurch die Schweißqualität beeinträchtigt wird. Würde man den Pendelrollenkopf einfach weglassen, müßte der genannte Bügel nach Art der genannten Stromschiene aufgebaut werden, wodurch der Vorteil der geringen bewegten Masse im Bereich der oberen Elektrodenrolle und deren große Vertikalbeweglichkeit verlorengehen würden. Zusätzlich müßten elastische Strombänder vorgesehen werden, die die Vertikalbeweglichkeit der oberen Elektrodenrolle ebenfalls möglichst wenig einschränken dürften. Die Vermeidung aller dieser Probleme würde einen aufwenigen Aufbau erfordern, der die durch das Weglas-sen des Pendelrollenkopfes angestrebten Einspa-rungen zunichte machen würde. Schließlich würde durch den Wegfall des Pendelrollenkopfes auch die einfache Möglichkeit des Drehantriebs der oberen Elektrodenrolle wegfallen.

Aufgabe der Erfindung ist es, bei einer Wider-standsnahtschweißmaschine der eingangs genann-ten Art die obere Elektrodenrolle ohne Zuhilfenahme eines Pendelrollenkopfes so zu lagern, daß bei einfachem Aufbau im wesentlichen ebenso gute Schweißergebnisse wie mit Pendelrollenkopf erzielt werden.

Diese Aufgabe ist erfindungsgemäß dadurch gelöst, daß der Ausleger nach einem Parallelogrammlenker-Prinzip mittels der Strombänder schwenkbar gelagert ist, die aus in Schweißrichtung und parallel zum Unterarm angeordneten dünnen Blechplatten aufgebaut und jeweils einerseits am Maschinengestell und andererseits am gegenüberliegenden Ende des Auslegers eingespannt sind und von denen wenigstens eine Blechplatte mit Abstand von den zu einem Paket zusammengefaßten übrigen Blechplatten angeordnet ist.

Bei der Widerstandsnahtschweißmaschine nach der Erfindung sind statt der litzenartig aufgebauten Strombänder wie bei der bekannten Widerstandsnahtschweißmaschine dünne Bleche vorgesehen, die in zwei Gruppen mit Abstand voneinander an beiden Enden am Maschinengestell beziehungsweise am Ausleger eingespannt sind. Wenigstens eine der Gruppen ist dabei als ein Paket von Blechen ausgebildet, um den Schweißstrom führen zu können, der über den Ausleger zur oberen Elektrodenrolle fließt. Die Dicke des Pakets oder die Anzahl der Bleche richtet sich dabei nach dem erforderlichen Stromquerschnitt. Erfindungsgemäß ist somit der an einem Ende die obere Elektrodenrolle tragende Ausleger am gegenüberliegenden Ende mit einer Art doppelter Spannbandlagerung versehen und somit nach einem Parallelogrammlenker-Prinzip schwenkbar gelagert. Aufgrund dieser Lagerung ist der Ausleger insgesamt nur um eine gedachte Achse auf- und abbeweglich, die sich quer zur Schweißrichtung erstreckt. Der Ausleger ist dagegen nicht um seine Längsachse oder die Schweißrichtung beweglich. Die obere Elektrodenrolle ist daher bezüglich der unteren Elektrodenrolle lediglich auf- und abbeweglich, wodurch jede Art von Verkantmoment vermieden wird, das sich nachteilig auf die Schweißqualität auswirken könnte. Der Aufbau der Lagerung des Auslegers ist einfach, weil die Strombänder bei der Widerstandsnahtschweißmaschine nach der Erfindung zwei Funktionen erfüllen, nämlich nicht nur die Stromübertragungsfunktion, sondern auch eine Führungsfunktion für den Ausleger. Da die Bleche der Strombänder und der Ausleger in Schweißrichtung hintereinander angeordnet sind, ergibt sich die vorstehend beschriebene definierte Bewegungscharakteristik der oberen Elektrodenrolle in der Vertikalebene. Die leichte Beweglichkeit der Elektrodenrolle in der Vertikalebene ist dabei gegeben, weil der Hub, den die Elektrodenrolle auszuführen hat, als unteren Grenzwert etwa die einfache Dicke des zu schweißenden Bleches und als oberen Grenzwert zusätzlich die Drahtdicke bei Verwendung einer Flachdrahtelektrode aufweist. Eine Flachdrahtelektrode dient dem Zweck, die Verunreinigung der Elektrodenrolle durch das Eingehen einer Verbindung mit Metall des Schweißgutes zu verhindern. Nähere Einzelheiten dazu finden sich in der oben erwähnten DE-PS 37 10 875 und beispielsweise in der DE-PS 35 16 397, die beide auf die Anmelderin selbst zurückgehen. Der genannte obere Grenzwert des Hubs liegt bei ca. zwei Millimeter. Bei derart geringfügigem Hub bleibt die doppelspannbandartige Lagerung des Auslegers um dessen Längsachse verwindungssteif, so daß im gesamten Hubbereich die Parallelführung der oberen Elektrodenrolle erhalten bleibt.

Der Ausleger und seine Lagerung, die maschinengestellseitig mit einer vom Schweißtransformator oder dergleichen Schweißquelle herführenden Leitung verbunden ist, sind parallel zum Unterarm und in relativ geringem Abstand von demselben angeordnet. Der Unteram ist Teil der Rückleitung des Schweißstromes, so daß in diesem der Schweißstrom in einer Richtung fließt, die zu der Richtung des Schweißstroms in dem Ausleger und in dessen Lagerung entgegengesetzt ist. Wegen des geringen Abstands tritt einseitige Stromverdrängung auf (auch als Nachbarschaftseffekt bezeichnet), die durch die Überlagerung der Magnetfelder von Zu- und Rückleitung entsteht und zur Folge hat, daß die Stromlinien in den Leitern in den einander benachbarten Bereichen derselben konzentriert werden. Nähere Einzelheiten dazu finden sich in "Widerstandsschweißen", Vorträge der 5. Stuttgarter Sondertagung Widerstands-Schweißtechnik 1962, Deutscher Verlag für Schweißtechnik (DVS) GmbH, Düsseldorf, 1963, Seite 49. Bei der Widerstandsnahtschweißmaschine nach der Erfindung ist es daher möglich, von den beiden Strombändern, welche die Doppelspannbandlagerung bilden, lediglich das untere Stromband als den überwiegenden Teil des Schweißstroms führendes, dikkes Paket auszubilden, wogegen das andere Stromband beträchtlich dünner ausgebildet sein kann und beispielsweise lediglich aus wenigstens einem Blech zu bestehen braucht. Trotzdem spräche mit Rücksicht zum Beispiel auf eine einfachere Lagerhaltung und dgl. nichts dagegen, beide Strombänder als die gleiche Dicke aufweisende Pakete dünner Bleche auszubilden.

Der Schweißdruck, das heißt der Auflagedruck der oberen Elektrodenrolle wird bei der Widerstandsnahtschweißmaschine nach der Erfindung durch entsprechende Lage der Einspannstellen des Auslegers von vornherein festgelegt. Die obere Elektrodenrolle übt daher stets die dabei eingestellte Druckkraft nach unten aus und ruht auch mit Druck auf der unteren Elektrodenrolle, wenn gerade kein Schweißgut zwi schen ihnen vorhanden ist. Bei Verwendung einer Flachdrahtelektrode wird der Ausleger mittels eines Hebels od.dgl. um den erwähnten oberen Hubgrenzwert nach oben verstellt, wenn die Flachdrahtelektrode am Anfang eingefädelt werden muß.

Vorteilhafte Ausgestaltungen der Erfindung bilden den Gegenstand der Unteransprüche.

Die Ausgestaltung der Erfindung nach Anspruch 2 ergibt eine besonders vorzügliche Schwenklagerung für den Ausleger, da diese lediglich auf der dem Unterarm benachbarten Seite ein stromführendes Paket aus dünnen Kupferblechen aufweist, wogegen die vom Unterarm abgewandte Seite lediglich aus einem Federstahlband besteht. Das ist, wie oben bereits dargelegt, zulässig, weil auf der vom Unterarm abgewandten Seite nur noch ein sehr geringfügiger Anteil des Schweißstroms fließt. Die Kombination aus einem Paket dünner Kupferbleche einerseits und einem dünnen Stahlband andererseits ermöglicht eine verlustfreie Übertragung des Schweißstroms bei gleichzeitig besten mechanischen Eigenschaften und kostengünstigerer Ausbildung der Lagerung.

In dieser Hinsicht bietet die Ausgestaltung der Erfindung nach Anspruch 5 die größten Vorteile, wenn das den Strom führende Paket aus Kupferfolien und das andere Spannband der Lagerung aus einem Federstahlband aufgebaut wird.

In der Ausgestaltung der Erfindung nach Anspruch 5 ist die Schwenklagerung des Auslegers direkt an eine Stromschiene der Stromzuführung angeschlossen, was die kürzeste Verbindung zur oberen Elektrodenrolle ergibt. Die (in Schweißrichtung gemessene) freie Länge der Bleche der Schwenklagerung oder deren lichte Weite ist durch die gewählten Werkstoffe und den erforderlichen Vertikalhub der oberen Elektrodenrolle vorgegeben. Die Länge des Auslegers zwischen oberer Elektrodenrolle und Schwenklage rung wird so kurz wie möglich gehalten, um unnötige bewegte Masse zu vermeiden. Eine gewisse Mindestlänge läßt sich dabei nicht unterschreiten, weil üblicherweise noch Platz vorhanden sein muß für eine der Elektrodenrolle vorgeschaltete Umlenkrolle, falls mit einer Flachdrahtelektrode gearbeitet wird.

Auch wenn sich die Stromschiene in der Ausgestaltung der Erfindung nach Anspruch 6 quer zum Unterarm in den Raum innerhalb der Schwenklagerung des Auslegers erstreckt, wird dessen Vertikalbeweglichkeit nicht behindert, weil die Stromschiene in diesem Bereich so weit ausgespart wird, daß genügend Abstand zu den benachbarten Blechen der Schwenklagerung vorhanden ist.

In der Ausgestaltung der Erfindung nach Anspruch 7 sind die Bleche der Schwenklagerung einfach mit der Stromschiene und dem Ausleger verschraubt, wie es bei Spannbandlagerungen üblicherweise der Fall ist.

Durch die Ausbildung als gabelförmiger Block wird in der Ausgestaltung der Erfindung nach Anspruch 8 die bewegte Masse des Auslegers weiter verringert.

Das in der Ausgestaltung der Erfindung nach Anspruch 9 vorgesehene Federbein hat keinerlei Führungsfunktion, sondern dient lediglich zum einstellbaren Festlegen des Schweißdruckes.

Wegen des Wegfalls des Pendelrollenkopfes muß für die obere Elektrodenrolle eine andere Antriebsmöglichkeit vorgesehen sein. In der Ausgestaltung der Erfindung nach Anspruch 10 erfolgt dieser Antrieb einfach durch die Flachdrahtelektrode, die an anderer Stelle in der Widerstandsnahtschweißmaschine angetrieben wird. Die gleiche Antriebsmöglichkeit kann für die untere Elektrodenrolle vorgesehen werden.

Bei durchgeführten Tests hat es sich erwiesen, daß die in der Ausgestaltung der Erfindung nach Anspruch 11 verwendeten Kupferfolien mit Dicken in dem Bereich von 7/100 bis 15/100 Millimeter gute Resultate erbringen. Dabei können entweder zwei Kupferfolienpakete oder ein Kupferfolienpaket in Kombination mit einem Stahlband als Schwenklagerung für den Ausleger benutzt werden.

Ausführungsbeispiele der Erfindung werden im folgenden unter Bezugnahme auf die Zeichnungen näher beschrieben. Es zeigt

Fig. 1 eine Teilseitenansicht der Widerstandsnahtschweißmaschine nach der Erfindung,

Fig. 2 die Widerstandsnahtschweißmaschine in einer Teilansicht von oben,

Fig. 3 in vergrößerter Darstellung die Einzelheit III von Fig. 1, und

Fig. 4 eine Teildarstellung einer anderen Ausführungsform einer Schwenklagerung.

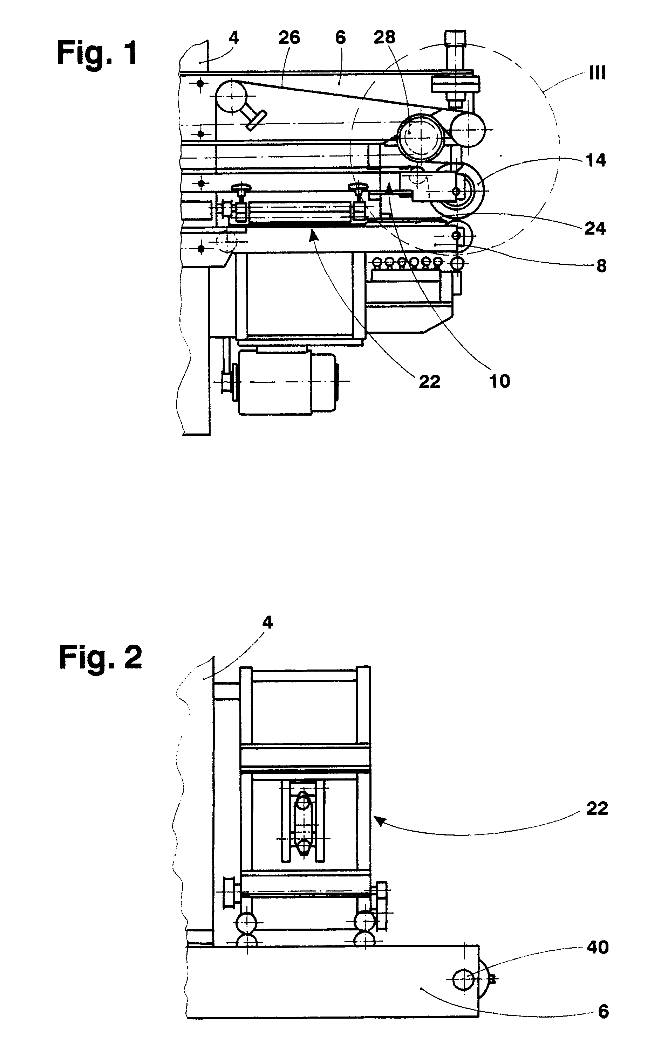

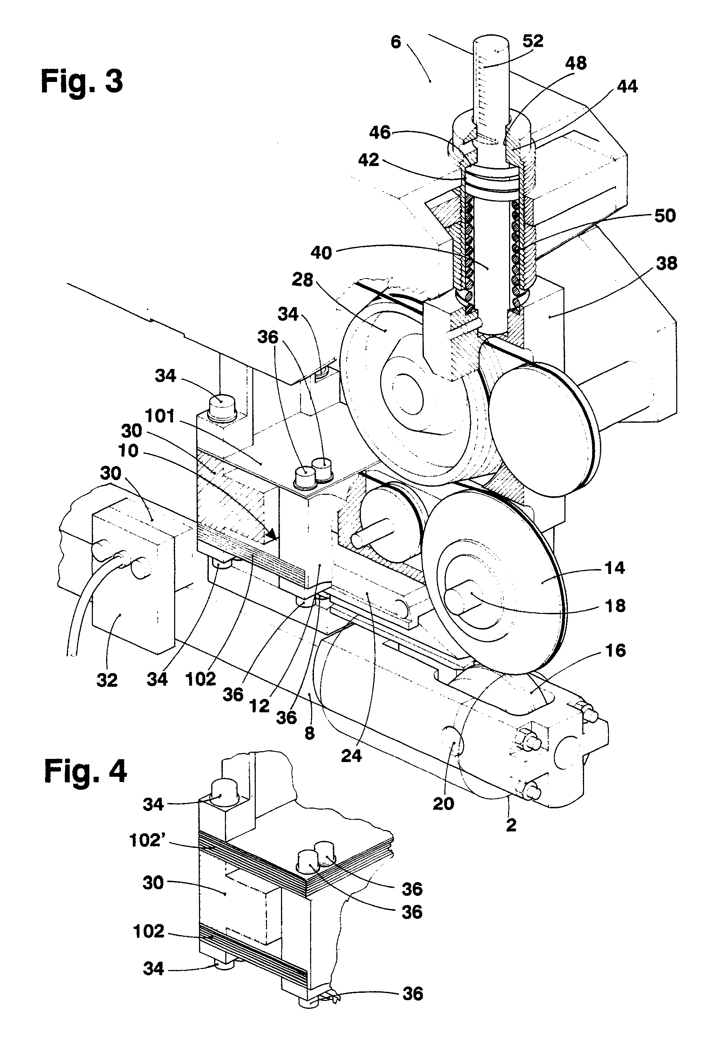

Fig. 1 zeigt in einer Teilseitenansicht den Ober- und Unterarmbereich einer Widerstandsnahtschweißmaschine zum Schweißen von Dosenrümpfen 2 (vgl. Fig. 3). Fig. 2 zeigt denselben Bereich der Widerstandsnahtschweißmaschine in einer Teildraufsicht. An einem Maschinengestell 4 sind ein Oberarm 6 und ein Unterarm 8 parallel zueinander und mit vertikalem Abstand voneinander befestigt. Ein zwischen dem Oberarm 6 und dem Unterarm 8 angeordneter Ausleger 12 ist mit einem Ende am Maschinengestell 4 schwenkbar gelagert und trägt an seinem freien Ende eine obere Elektrodenrolle 14. Der Unterarm trägt an seinem freien Ende eine untere Elektrodenrolle 16. Die Elektrodenrollen 14, 16 sind vertikal übereinander angeordnet und um Achsen 18 bzw. 20, die an dem Ober- bzw. Unterarm befestigt sind, frei drehbar. Die Schwenklagerung des Auslegers 12, die in den Zeichnungen insgesamt mit 10 bezeichnet ist, ist weiter unten noch näher beschrieben. Die Schwenklagerung 10 und der Ausleger 12 sind in Schweißrichtung, welches eine zu der Längsachse des Unterarms 8 paral le Richtung ist, hintereinander angeordnet. Die Schwenklagerung 10 ist auf ebenfalls weiter unten noch näher beschriebene Weise so ausgebildet, daß der Ausleger 12 die obere Elektrodenrolle 14 vertikal und in Schweißrichtung führt, die obere Elektrodenrolle 14 also lediglich Bewegungen in der die Schweißrichtung und ihre mittlere Querschnittsebene enthaltenden Vertikalebene ausführen kann. Der Unterarm 8 ist starr, so daß die untere Elektrodenrolle lediglich um ihre Achse 20 drehbeweglich ist.

Die in den Zeichnungen dargestellte Widerstandsnahtschweißmaschine ist eine sehr kompakt gebaute Maschine, bei welcher die Bleche für die längsnahtzuschweißenden Dosenrümpfe 2 unmittelbar vor der Schweißstelle einer Rundstation 22 zugeführt werden, die sie in zylindrische Form bringt. Mittels einer Z-Schiene 24 werden die Zargenränder an der Stelle der herzustellenden Längsnaht in die richtige gegenseitige Lage gebracht und in diesem Zustand zur Längsnahtschweißung zwischen die obere Elektrodenrolle 14 und die untere Elektrodenrolle 16 mittels eines in den Zeichnungen nicht dargestellten Förderers eingeführt.

In der dargestellten Widerstandsnahtschweißmaschine ist eine Flachdrahtelektrode 26 auf in den Fig. 1 und 3 dargestellte Weise um die obere Elektrodenrolle 14 geführt und wird durch eine Antriebsrolle 28 angetrieben, welcher eine nichtdargestellte Antriebseinrichtung zugeordnet ist. Ebenso ist üblicherweise eine Flachdrahtelektrode um die untere Elektrodenrolle 16 geführt, was der Übersichtlichkeit halber nicht dargestellt worden ist, da die Führung der Drahtelektrode Gegenstand einer weiteren Patentanmeldung der Anmelderin ist und für das Verständnis der hier beschriebenen Erfindung keiner näheren Beschreibung bedarf.

Der Ausleger 12 ist ein im Querschnitt gabelförmiger Block, an dessen freiem Ende die Achse 18, auf der die obere Elektrodenrolle 14 drehbar ist, befestigt ist. Der Ausleger 12 besteht aus elektrisch gut leitendem Material. Die Schwenklagerung 10 des Auslegers 12 besteht in dem dargestellten Ausführungsbeispiel aus einer dünnen Blechplatte 101 aus Federstahl, also einem Stahlband, und aus einem Paket aus weiteren dünnen Blechplatten 102, die hier jeweils aus Kupferfolie bestehen. Sämtliche dünnen Blechplatten 101, 102 sind parallel zu dem Unterarm und außerdem in Richtung quer zu dem Unterarm übereinander angeordnet. Die dünnen Blechplatten bilden nicht nur die Schwenklagerung 10 für den Ausleger 12, sondern auch Strombänder, über die der oberen Elektrodenrolle 14 der Schweißstrom zugeführt wird. Aus den eingangs dargelegten Stromverteilungsgründen ist es ausreichend, nur das untere Stromband aus elektrisch gut leitenden Blechen herzustellen, da der Schweißstrom hauptsächlich dort fließen wird. Die obere Blechplatte 101 kann dagegen aus Federstahl hergestellt werden, weil über sie kaum Schweißstrom fließen wird. Das Stahlband 101 und das Paket von Kupferfolien 102 sind jeweils einerseits am Maschinengestell 4 und andererseits am gegenüberliegenden Ende des Auslegers 12 eingespannt. Zwischen dem Stahlband 101 und dem Kupferfolienpaket erstreckt sich quer zur Schweißrichtung das Ende einer im Querschnitt rechteckigen Stromschiene 30, die vom Schweißtransformator herführt. Deren Verbindung mit dem nicht dargestellten Schweißtransformator ist durch einen Stromschienenteil 32 lediglich angedeutet. Die Stromschiene 30 ist als massiver Kupferblock ausgebildet, in welchem Gewindebohrungen gebildet sind, in die Schrauben 34 eingeschraubt sind, um das Federband und das Kupferfolienpaket auf die dargestellte Weise an der Stromschiene 30 und daher am Maschinengestell festzuspannen. Der als gabelförmiger Block ausgebildete Ausleger 12 hat an dem der Stromschiene 30 gegenüberliegenden Ende einen durchgehenden massiven Steg, in welchem ebenfalls Gewindebohrungen vorgesehen sind, die entsprechende Schrauben 36 aufnehmen. Der Ausleger 12 ist auf diese Weise nach einem Parallelogrammlenker-Prinzip mittels der Strombänder 101, 102 schwenkbar gelagert. Die Stromschiene 30, die sich quer zur Schweißrichtung durch einen Raum erstreckt, der durch das Maschinengestell 4, das diesem gegenüberliegende Ende des Auslegers und die Blechplatten 101, 102 gebildet ist, hat außerhalb ihrer Einspannstellen in diesem Raum Abstand von den benachbarten Blechplatten, so daß die Stromschiene 30 die Schwenkbeweglichkeit des Auslegers 12 nicht beeinträchtigt. Statt des Stahlbandes 101 könnte auch ein weiteres Paket von Kupferfolien 102' vorgesehen werden (vgl. Fig. 4).

Statt an der Stromschiene 30 könnte die Schwenklagerung 10 auch direkt an dem Maschinengestell 4 eingespannt sein und über eine zusätzliche elektrische Verbindung an die Stromschiene 30 angeschlossen sein. In der dargestellten Ausführungsform ergibt sich aber eine kompaktere Bauweise.

Die Dicke der Kupferfolien betrug in einem getesteten Ausführungsbeispiel 7/100 mm. Tests haben ergeben, daß auch eine Dicke von 15/100 mm geeignet ist. In Abhängigkeit von der auftretenden Stromstärke und den geometrischen Verhältnissen in der Widerstandsnahtschweißmaschine können dazwischen gelegene Werte oder aber kleinere oder größere Werte gewählt werden.

Der untere Elektrodenarm 8 ist starr und besteht aus elektrisch gut leitendem Material. Jede Elektrodenrolle hat einen mit ihrer Achse 18 bzw. 20 verbundenen Stator, um den ein Rotor angeordnet ist. Zwischen Stator und Rotor ist ein Ringspalt vorgesehen, der zur Stromübertragung mit Flüssigmetall gefüllt ist. Darüber hinaus sind die Elektrodenrollen auf übliche Weise im Inneren gekühlt.

Auf dem freien Ende des Auslegers 12 ist eine gabelförmige Konsole 38 angeordnet, in die oben ein Bolzen 40 eingesetzt ist, welcher mit seinem anderen Ende aus dem Oberarm 6 hervorsteht. In eine Gewindebohrung 42 in dem Oberarm 6 ist eine mit Außengewinde versehene Schulterbüchse 44 eingeschraubt. Deren Schulter 46 umschließt eine Bohrung 48, durch die sich der Bolzen 40 erstreckt. Eine Feder 50 stützt sich oben an der Schulter 46 und unten auf der Konsole 38 ab und übt Druck auf das freie Ende des Auslegers 12 und daher auf die obere Elektrodenrolle 14 aus. Durch mehr oder weniger weites Einschrauben der Schulterbüchse 44 in den Oberarm 6 kann die Druckkraft der Feder 50 auf gewünschte Weise eingestellt werden, wobei der Federdruck durch eine am oberen Ende des Bolzens 40 vorgesehene Skala 52 ablesbar ist. Zwischen dem Ausleger 12 und dem Oberarm 6 ist daher eine Art Teleskopfederbein gebildet, über dessen Hublänge der Schweißdruck einstellbar ist.

Im Betrieb fließt der Schweißstrom vom Schweißtransformator aus über die Stromschiene 30 und die Strombänder 101, 102 zu dem Ausleger 12 und von diesem aus zur oberen Elektrodenrolle 14. Von dieser aus fließt der Schweißstrom beim Schweißen über den Dosenrumpf 2 zur unteren Elektrodenrolle 16 und von dieser aus über den Unterarm 8 zurück zum Schweißtransformator. Die Schwenklagerung 10 bildet somit eine Art Doppelspannbandlagerung zum schwenkbaren Lagern des Auslegers 12 und dient gleichzeitig zur Schweißstromübertragung. Die Schwenklagerung 10 gestattet der oberen Elektrodenrolle 14 lediglich eine vertikale Auf- und Abbewegung. Der beschriebene Aufbau ermöglicht, einen aufwendigen Pendelrollenkopf zu vermeiden und die Widerstandsnahtschweißmaschine kompak ter zu bauen, ohne daß die gute Führung der oberen Elektrodenrolle 14 vertikal und in Schweißrichtung verloren geht.

**Ansprüche**

1. Widerstandsnahtschweißmaschine, insbesondere zum Längsnahtschweißen von Dosenrümpfen, mit zwei übereinander angeordneten Elektrodenrollen, mit einem schwenkbar gelagerten Ausleger, der die obere Elektrodenrolle trägt und vertikal und in Schweißrichtung führt, mit einem Unterarm, der die untere Elektrodenrolle trägt, und mit flexiblen Strombändern in der Stromzuführung zu der oberen Elektrodenrolle, **dadurch gekennzeichnet,** daß der Ausleger (12) nach einem Parallelogrammlenker-Prinzip mittels der Strombänder schwenkbar gelagert ist, die aus in Schweißrichtung und parallel zum Unterarm (8) angeordneten dünnen Blechplatten (101, 102, 102') aufgebaut und jeweils einerseits am Maschinengestell (4) und andererseits am gegenüberliegenden Ende des Auslegers (12) eingespannt sind und von denen wenigstens eine Blechplatte (101) mit Abstand von den zu einem Paket zusammengefaßten übrigen Blechplatten (102) angeordnet ist.

2. Widerstandsnahtschweißmaschine nach Anspruch 1, dadurch gekennzeichnet, daß die eine Blechplatte (101) auf der von dem Unterarm (8) abgewandten Seite des Pakets angeordnet ist und aus Federstahl besteht und daß die Blechplatten (102; 102') des Pakets jeweils aus Kupfer bestehen.

3. Widerstandsnahtschweißmaschine nach Anspruch 1, dadurch gekennzeichnet, daß die Blechplatten (102, 102') zu zwei mit Abstand voneinander angeordneten Paketen zusammengefaßt sind.

4. Widerstandsnahtschweißmaschine nach einem der Ansprüche 1 bis 3, dadurch gekennzeichnet, daß die Blechplatten (102, 102') jedes Pakets aus Kupferfolie bestehen.

5. Widerstandsnahtschweißmaschine nach einem der Ansprüche 1 bis 4, dadurch gekennzeichnet, daß auf der dem Maschinengestell (4) benachbarten Seite der Schwenklagerung (10) zwischen den Blechplatten (101, 102; 102') eine Stromschiene (30) der Stromzuführung eingespannt ist.

6. Widerstandsnahtschweißmaschine nach Anspruch 5, dadurch gekennzeichnet, daß die Stromschiene (30) sich quer zur Schweißrichtung durch einen Raum erstreckt, der durch das Maschinengestell (4), das diesem gegenüberliegende Ende des Auslegers (12) und die Blechplatten (101, 102; 102') gebildet ist, und außerhalb seiner Einspannstellen in diesem Raum Abstand von den benachbarten Blechplatten (101, 102; 102') hat.

7. Widerstandsnahtschweißmaschine nach Anspruch 5 oder 6, dadurch gekennzeichnet, daß die Stromschiene (30) und das gegenüberliegende Ende des Auslegers (12) auf der dem Unterarm (8) zugewandten und auf der von dem Unterarm (8) abgewandten Seite Gewindebohrungen aufweisen, welche Schrauben (34, 36) zum Festspannen der Blechplatten (101, 102; 102') aufnehmen.

8. Widerstandsnahtschweißmaschine nach einem der Ansprüche 1 bis 7, dadurch gekennzeichnet, daß der Ausleger (12) ein im Querschnitt gabelförmiger Block ist, an dessen freiem Ende die obere Elektrodenrolle (14) drehbar gelagert ist.

9. Widerstandsnahtschweißmaschine nach einem der Ansprüche 1 bis 8, dadurch gekennzeichnet, daß zwischen dem freien Ende des Auslegers (12) und dem Maschinengestell (4) eine Art Teleskopfederbein (38-52) angeordnet ist, das eine auf das freie Ende des Auslegers (12) einwirkende Feder (50) enthält, die sich einerseits am Maschinengestell (4) und andererseits auf dem Ausleger (12) abstützt und deren Kraft zum Einstellen des Schweißdruckes über die Hublänge des Teleskopfederbeins einstellbar ist.

10. Widerstandsnahtschweißmaschine nach einem der Ansprüche 1 bis 9, mit über jede Elektrodenrolle geführter Flachdrahtelektrode, dadurch gekennzeichnet, daß wenigstens die obere Elektrodenrolle (14) durch die Flachdrahtelektrode (26) antreibbar ist.

11. Widerstandsnahtschweißmaschine nach Anspruch 4, dadurch gekennzeichnet, daß die Dicke der Kupferfolie (102; 102') einen Wert in dem Bereich von 7/100 bis 15/100 Millimeter hat.

**Fig. 1**

**Fig. 2**

# Fig. 3

# Fig. 4